# EUROPEAN PATENT SPECIFICATION

(11) **EP 3 895 912 B1**
(45) Date of publication and mention of the grant of the patent: **27.09.2023**
(21) Application number: 21168091.3
(22) Date of filing: 13.04.2021
(51) Int. Cl.: B60C 9/12, B60C 19/00

(54) **PNEUMATIC TIRE**
LUFTREIFEN
PNEUMATIQUE

(30) Priority: 15.04.2020 JP 2020073006
(43) Date of publication of application: 20.10.2021
(73) Proprietor: Sumitomo Rubber Industries, Ltd., Kobe-shi, Hyogo-ken 651-0072 (JP)
(72) Inventor: YUKAWA, Naoki, Kobe-shi, Hyogo 651-0072 (JP); SATO, Takuya, Kobe-shi, Hyogo 651-0072 (JP); MATSUNAMI, Sho, Kobe-shi, Hyogo 651-0072 (JP)
(74) Representative: Manitz Finsterwald Patent- und Rechtsanwaltspartnerschaft mbB

(56) References cited:
- EP-A1- 3 093 165
- EP-A1- 3 461 658
- EP-A1- 3 552 849
- WO-A1-2019/078280

## Description

### BACKGROUND OF THE INVENTION

### Field of the Invention

The present invention relates to a pneumatic tire and specifically relates to a pneumatic tire including a sealant layer on the tire inner cavity side of a tread portion thereof.

### Description of the Background Art

Hitherto, a pneumatic tire including a sponge-like sound-damping body fixed on the tire inner cavity side of a tread portion thereof in order to reduce the noise of the tire generated during running of a vehicle has been proposed (see JP 3787343 B2 or WO 2019/078280 A1).

In addition, in recent years, a pneumatic tire including a sealant layer disposed on the tire inner cavity side of a tread portion thereof and a sound-damping body attached to the sealant layer, in order to enhance both the noise performance and the puncture sealing performance of the tire, has been proposed (see JP 2017-065673 A or EP 3 461 658 A1). In this pneumatic tire, when a through hole is formed in the tread portion by a foreign matter, such as a nail, piercing the tread portion, a part of the sealant layer flows into the through hole. Accordingly, the action of sealing the through hole and ensuring the air sealing performance of the tire is expected.

Meanwhile, in the pneumatic tire in which the sound-damping body is attached to the sealant layer, when a foreign matter such as a nail penetrates the tread portion and comes into contact with the sound-damping body, a part of the sound-damping body may be destroyed. In addition, after the foreign matter comes out of the tread portion, a broken piece of the sound-damping body may clog the inside of the through hole of the tread portion. In such a case, there is a problem that sealing of the through hole by a sealant material is hindered, and further, the air sealing performance is decreased.

The present invention has been made in view of the above-described problem, and a main object of the present invention is to provide a pneumatic tire that can suppress a decrease in air sealing performance while suppressing noise.

### SUMMARY OF THE INVENTION

The present invention is directed to a pneumatic tire including: a tread portion; a self-sealing sealant layer disposed on a tire inner cavity side of the tread portion; and a sound-damping body attached to the sealant layer, wherein the pneumatic tire is configured such that, when a foreign matter that has penetrated the tread portion comes into contact with the sound-damping body, the sound-damping body becomes separated from the sealant layer, and an adhesive force between the sound-damping body and the sealant layer is not greater than 5.0 N/cm².

In another aspect of the present invention, an adhesive force between the sound-damping body and the sealant layer may be not less than 0.10 N/cm².

In still another aspect of the present invention, the sound-damping body may have an elongation of 100% to 400%.

In still another aspect of the present invention, the sound-damping body may have a hardness of 10 to 250 (N/314 cm²).

In still another aspect of the present invention, the sound-damping body may be a sponge.

In still another aspect of the present invention, the sound-damping body may be an ether/ester-based mixed polyurethane sponge.

In still another aspect of the present invention, the sound-damping body may be in direct contact with the sealant layer.

In the pneumatic tire according to the present invention, by adopting the above configuration, a decrease in air sealing performance is suppressed while noise during running is suppressed.

### BRIEF DESCRIPTION OF THE DRAWINGS

FIG. 1 is a cross-sectional view of a pneumatic tire according to an embodiment; and
FIGS. 2(A) to 2(C) are schematic partial cross-sectional views of a tread portion for describing the action of the embodiment.

### DESCRIPTION OF THE PREFERRED EMBODIMENTS

Hereinafter, an embodiment of the present invention will be described with reference to the drawings. It should be understood that the drawings contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. Furthermore, the specific configurations shown in the embodiment and the drawings are for understanding the contents of the present invention, and the present invention is not limited to the specific configurations shown.

### [Overall Structure of Tire]

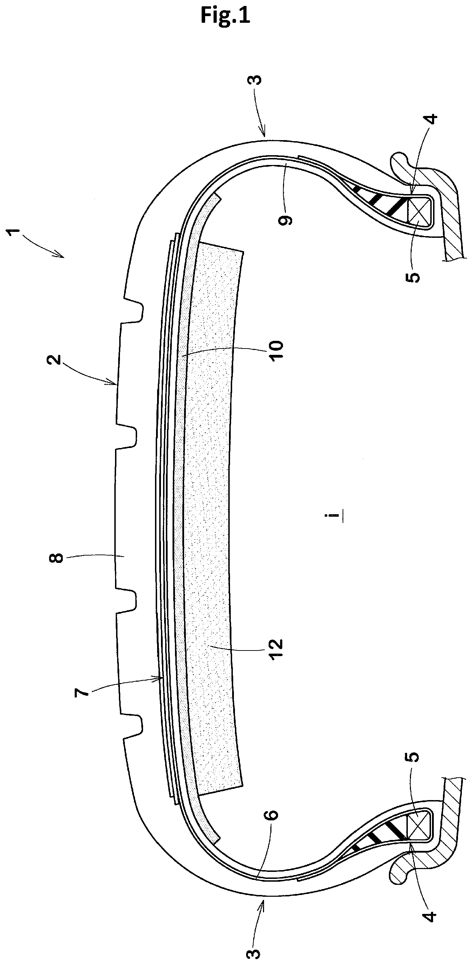

FIG. 1 is a cross-sectional view of a pneumatic tire 1 according to an embodiment. As shown in FIG. 1, the pneumatic tire 1 is, for example, a tubeless tire having a radial structure, and is formed in a toroidal shape including a tread portion 2, a pair of sidewall portions 3, and a pair of bead portions 4. In each of the pair of bead portions 4, a non-stretchable bead core 5 is embedded.

The pneumatic tire 1 also includes, for example, a carcass 6 extending on and between the bead cores 5, a belt layer 7 disposed outward of the carcass 6 in the tire radial direction and within the tread portion 2, and a tread rubber 8 disposed outward of the belt layer 7. These elements can be provided as appropriate according to a conventional manner. In addition, if necessary, a band layer including a reinforcing cord extending in the tire circumferential direction, or the like may be disposed between the belt layer 7 and the tread rubber 8 (not shown).

On the tire inner cavity i side of the carcass 6, an inner liner layer 9 is disposed over substantially the entire region thereof. The inner liner layer 9 is formed from an air-impermeable rubber such as an isobutylene-isoprene-rubber, prevents permeation of the air in the tire inner cavity i, and maintains air sealing performance.

Moreover, the pneumatic tire 1 according to the present embodiment includes a self-sealing sealant layer 10 disposed on the tire inner cavity i side of the tread portion 2, and a sound-damping body 12 attached to the sealant layer 10.

### [Sealant Layer]

The sealant layer 10 is disposed on the tire inner cavity i side of the tread portion 2, that is, inward of the inner liner layer 9. The sealant layer 10 of the present embodiment is made from a sealant material having predetermined adhesiveness, viscosity, and fluidity, and is formed by applying the sealant material to the inner cavity side of the tread portion 2. The sealant layer 10 is preferably formed so as to have a thickness of, for example, 1 mm or greater and preferably 2 mm or greater in order to exhibit air sealing performance at the time of puncture.

When a nail pierces the tread portion 2 so as to penetrate the tread portion 2, the sealant material adheres to the periphery of the nail so as to cover the nail that has projected into the tire inner cavity i, thereby preventing air leakage. In addition, when the nail comes out of the tread portion 2, a through hole is formed in the tread portion 2, but the sealant material can enter the through hole due to the tire internal pressure with movement of the nail, thereby sealing the through hole. The self-sealing sealant layer 10 of the present embodiment has such two functions.

The sealant layer 10 is preferably formed, for example, in a region where treading on a nail, or the like, is likely to occur. From such a viewpoint, the sealant layer 10 is preferably formed over a ground-contact region, of the tread portion 2, which is brought into contact with a road surface. In another embodiment, the sealant layer 10 may be disposed beyond the ground-contact region of the tread portion 2.

The "ground-contact region" is a ground-contact region in a standard running state of the pneumatic tire 1, and may be, for example, a region that is brought into contact with a road surface at a camber angle of 0° under a normal load after the pneumatic tire 1 is mounted to a normal rim and adjusted to a normal internal pressure.

In the present description, the "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

In the present description, the "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the present description, the "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

### [Sealant material]

The sealant material typically includes a rubber component, a liquid polymer, a crosslinking agent, etc.

As the rubber component, for example, a butyl-based rubber such as isobutylene-isoprene-rubber and halogenated isobutylene-isoprene-rubber is adopted. In addition, as the rubber component, a butyl-based rubber and a diene-based rubber may be blended and used. In this case, in order to ensure the fluidity of the sealant material, the amount of the butyl-based rubber in 100 parts by weight of the rubber component is preferably not less than 90 parts by weight.

Examples of the liquid polymer include liquid polybutene, liquid polyisobutene, liquid polyisoprene, liquid polybutadiene, liquid poly-α-olefin, liquid isobutylene, liquid ethylene-α-olefin copolymers, liquid ethylene-propylene copolymers, and liquid ethylenebutylene copolymers. Among them, from the viewpoint of the adhesiveness of the sealant material, liquid polybutene is particularly preferable.

The amount of the liquid polymer may be determined as appropriate in consideration of the adhesiveness of the sealant material, but the amount of the liquid polymer per 100 parts by weight of the rubber component is preferably not less than 50 parts by weight and more preferably not less than 100 parts by weight. In addition, when the fluidity, etc., of the sealant material are taken into consideration, the amount of the liquid polymer per 100 parts by weight of the rubber component is preferably not greater than 400 parts by weight and more preferably not greater than 300 parts by weight.

As the crosslinking agent, a compound that is conventionally used can be used, and, for example, an organic peroxide is preferable. Use of the butyl-based rubber or the liquid polymer in an organic peroxide crosslinking system improves the adhesiveness, the sealing performance, the fluidity, processability, etc. As the organic peroxide, for example, acyl peroxides are preferable, and dibenzoyl peroxide is particularly preferable.

The amount of the organic peroxide (crosslinking agent) per 100 parts by weight of the rubber component is preferably not less than 0.5 parts by weight and further preferably not less than 1.0 part by weight. If the amount is less than 0.5 parts by weight, the crosslink density may decrease, resulting in flow of the sealant material. The upper limit of the amount is preferably not greater than 40 parts by weight and further preferably not greater than 20 parts by weight. If the amount is greater than 40 parts by weight, the crosslink density may increase, resulting in a decrease in sealing performance.

### [Sound-Damping Body]

The sound-damping body 12 is attached to the inner side of the sealant layer 10. In the present embodiment, the surface of the sound-damping body 12 on the outer side in the tire radial direction is in direct contact with the sealant layer 10, and the sound-damping body 12 is held on the sealant layer 10 by the adhesiveness of the sealant layer 10.

The sound-damping body 12 is, for example, a sponge-like porous structure, and is formed of, for example, a sponge obtained by foaming a rubber or synthetic resin. In a preferred embodiment, the sound-damping body 12 is formed of a sponge having open cells. The pores on the surface of and/or inside the sponge convert the vibrational energy of the air in the tire inner cavity i into thermal energy. Therefore, the sound-damping body 12 can reduce resonance noise and the like during tire running.

The material, etc., of the sponge are not particularly limited, but, for example, a polyurethane sponge having excellent weather resistance, and the like are suitable, and among them, an ether/ester-based mixed polyurethane sponge is preferable.

The sound-damping body 12 is configured, for example, by disposing a belt-shaped sponge having a rectangular cross-sectional shape, in a substantially annular shape along the tire circumferential direction. In another embodiment, the sound-damping body 12 may be provided intermittently in the tire circumferential direction. The shape and the size of the sound-damping body 12 are not particularly limited, and may be determined as appropriate such that noise during tire running can be reduced.

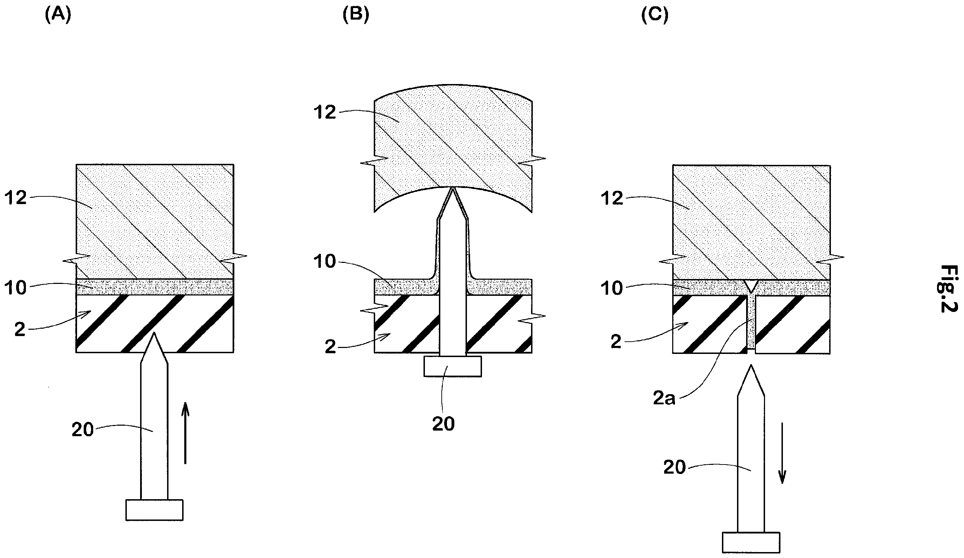

FIGS. 2(A) to 2(C) schematically show a state when a nail 20 as a foreign matter penetrates the tread portion 2. FIG. 2(A) shows a state where the tip of the nail 20 has been stuck into the tread portion 2. Here, the nail 20 has not yet penetrated the tread portion 2.

FIG. 2(B) shows a state where the nail 20 has pierced deeper into the tread portion 2. The pneumatic tire 1 according to the present embodiment is configured such that, as shown in FIG. 2(B), when the nail 20 having penetrated the tread portion 2 comes into contact with the sound-damping body 12, the sound-damping body 12 becomes separated from the sealant layer 10. In a preferred embodiment, assuming a standard nail treading situation during running, for example, the pneumatic tire 1 is configured such that, when a JIS N100 round nail (body diameter: 4.2 mm) is perpendicularly driven into the tread portion 2 (groove bottom portion) of the pneumatic tire 1 in a normal state at a driving speed of 10 mm/s by a length of 40 mm, the sound-damping body 12 around the nail becomes separated from the sealant layer 10.

In the state of FIG. 2(B), the sound-damping body 12 receives a force toward the inner side in the tire radial direction due to contact with the tip of the nail 20 and is pushed upward so as to become partially separated from the sealant layer 10. Therefore, the nail 20 is prevented from piercing the sound-damping body 12, and destruction of the sound-damping body 12 is suppressed.

FIG. 2(C) shows a state where the nail 20 has fallen out of the tread portion 2 and a through hole 2a has been formed in the tread portion 2. As is obvious from FIG. 2 (C), in the pneumatic tire 1 according to the present embodiment, destruction of the sound-damping body 12 due to the piercing of the nail 20 is suppressed, so that a broken piece of the sound-damping body 12 does not enter the through hole 2a. Therefore, the sealant material which is the sealant layer 10 can enter the through hole 2a without being disturbed by a broken piece of the sound-damping body 12, etc., and can exhibit an air sealing effect.

As described above, in the pneumatic tire 1 according to the present embodiment, a decrease in air sealing performance is suppressed while noise during running is suppressed by the sound-damping body 12.

### [Adhesive Force between Sound-Damping Body and Sealant Layer]

In order to effectively exert the above-described functions, the adhesive force between the sound-damping body 12 and the sealant layer 10 is not greater than 5.0 (N/cm²) and preferably not greater than 3.0 (N/cm²). By adjusting the adhesive force between the sound-damping body 12 and the sealant layer 10 to be smaller as described above, the sound-damping body 12 more easily becomes separated from the sealant layer 10 at the time of contact between the sound-damping body 12 and a foreign matter, and piercing of the foreign matter into the sound-damping body 12 is more reliably suppressed.

On the other hand, when the adhesive force between the sound-damping body 12 and the sealant layer 10 is excessively small, the sound-damping body 12 easily comes off the sealant layer 10 during normal running. From such a viewpoint, the adhesive force between the sound-damping body 12 and the sealant layer 10 is preferably adjusted to be, for example, not less than 0.10 (N/cm²) and preferably not less than 0.50 (N/cm²).

In the present description, the adhesive force between the sound-damping body 12 and the sealant layer 10 is measured as follows. First, a test piece having a rectangular parallelepiped shape with a thickness of 10 mm and an adhesion surface formed as a square of 30 mm × 30 mm is cut out from the sound-damping body 12, and the adhesion surface of the test piece is brought into close contact with the flat sealant layer 10. The opposite surface of the test piece from the adhesion surface is firmly adhered to a jig. Next, the test piece is pulled perpendicularly to the sealant layer 10 using the jig, the force when the test piece is peeled off from the sealant layer 10 is measured, and an adhesive force is obtained by dividing this force by the area of the adhesion surface of the test piece. The tensile speed of the jig is set to 300 mm/min.

An example of the method for decreasing the adhesive force between the sound-damping body 12 and the sealant layer 10 is a method of reducing the addition amount of the liquid polymer in the composition of the sealant material. In addition, as another method, the adhesive force of the sealant layer 10 to the sound-damping body 12 can also be decreased by, for example, applying warm air to the sealant layer 10, drying the sealant layer 10, or irradiating the sealant layer 10 with ultraviolet rays after the sealant layer 10 is applied and formed on the tread portion 2.

### [Elongation of Sound-Damping Body]

The sound-damping body 12 is not particularly limited, but, for example, preferably has an elongation of 100% or greater and more preferably 150% or greater. Elastic deformation of such a sound-damping body 12 is easily promoted at the time of contact with a foreign matter, and piercing of the foreign matter into the sound-damping body 12 is further suppressed. In addition, the sound-damping body 12 tends to exhibit a higher noise-reduction effect as the elongation thereof is larger. Thus, such a sound-damping body 12 is preferable from the viewpoint of both air sealing performance and noise performance. For example, in consideration of availability, the elongation of the sound-damping body 12 is, for example, not greater than 400% and preferably not greater than 300%. In the present description, the elongation of the sound-damping body 12 is defined as the elongation when the test piece is broken, in accordance with JIS K6400-5 (2012).

### [Hardness of Sound-Damping Body]

The hardness of the sound-damping body 12 is not particularly limited. However, when the hardness of the sound-damping body 12 is excessively low, a foreign matter easily pierces the sound-damping body 12 at the time of contact with the foreign matter. From such a viewpoint, the hardness of the sound-damping body 12 is, for example, not less than 10 (N/314 cm²) and preferably not less than 100 (N/314 cm²). On the other hand, when the hardness of the sound-damping body 12 is excessively high, the noise reduction effect of the sound-damping body 12 may be relatively decreased. From such a viewpoint, the hardness of the sound-damping body 12 is, for example, not greater than 250 (N/314 cm²) and preferably not greater than 200 (N/314 cm²). In the present description, the hardness of the sound-damping body 12 is defined as the hardness measured on the basis of the D method of the hardness test of JIS K6400-2 (2012).

### EXAMPLES

### Next, more specific and non-limiting examples of the present invention will be described.

A plurality of kinds of pneumatic tires having the basic structure in FIG. 1 and having a sealant layer and a sound-damping body were produced as test tires on the basis of specifications in Table 1. The composition of each sealant material is as shown in Table 2. The common specifications of each tire are as follows.
Tire size: 235/45R17
Rim size: 17×8J
Cross-sectional area of tire inner cavity when tire was fitted on rim: 187 cm²
Initial internal pressure: 230 kPa
Sound-damping body: polyurethane sponge (width: 200 mm, thickness: 10 mm, length: 1900 mm)
Width in tire axial direction of sealant layer: 190 mm
Thickness of sealant layer: about 3 mm
The following tests were carried out on each tire.

### [Adhesive Force between Sound-Damping Body and Sealant Layer]

As described above, first, a test piece having a rectangular parallelepiped shape with a thickness of 10 mm and an adhesion surface formed as a square of 30 mm × 30 mm was cut out from the sound-damping body, and the adhesion surface of the test piece was brought into close contact with the flat sealant layer. The opposite surface of the test piece from the adhesion surface was firmly adhered to a jig. Next, the test piece was pulled perpendicularly to the sealant layer using the jig, the force when the test piece was peeled off from the sealant layer was measured, and an adhesive force was obtained by dividing this force by the area of the adhesion surface of the test piece. The tensile speed of the jig was set to 300 mm/min.

### [Tests for Separation, Air Sealing Performance, etc.]

First, each test tire was fitted to a rim and adjusted to the initial internal pressure. Next, 20 nails were driven into a circumferential groove of each test tire at groove bottom positions at regular intervals by a length of 40 mm so as to penetrate the tread portion. Next, each test tire was removed from the rim, and whether the sound-damping body was separated from the sealant layer was observed with the naked eye ("presence/absence of separation of sound-damping body" in Table 1). If separation occurs even at one location, it is evaluated as "presence". As the nails, JIS N100 round nails (body diameter: 4.2 mm) were used.

In addition, the number of locations where the sound-damping body was separated from the sealant layer was measured (an item of "number of separated locations of sound-damping body" in Table 1).

After the above measurement, each test tire was fitted to the rim again, the nails were removed therefrom, and the test tire was filled to the internal pressure and left for 24 hours. Thereafter, the number of locations where the nail hole was sealed by the sealant layer was measured (an item of "number of air-sealed locations" in Table 1).

### [Damage Test for Sound-Damping Body during Running]

Each test tire was fitted to a rim and adjusted to the initial internal pressure. Next, the above nails were cut into a length of 40 mm, one of the nails was driven into the bottom of a circumferential groove on the tread portion of the tire until the head of the nail reached the tread portion, and running was performed on a test course for about 0.5 hours. Thereafter, the tire was removed from the rim, and the presence/absence of separation or damage of the sound-damping body was checked.

### [Sound Absorption Performance]

Each test tire was caused to run on a drum tester under the conditions of the initial internal pressure and a load of 4.6 kN, and the road noise at this time was collected by a microphone, and a sound pressure level (dB (A)) was measured at the peak value of cavity resonance sound near 205 Hz of vertical axial force of the tire. For evaluation, the result was indexed such that the difference between the sound pressure levels of Comparative Example 1 and Comparative Example 2 became 100. If the value is less than 100, it means that the sound absorption performance is lower than that of Comparative Example 2 and the road noise is larger than that of Comparative Example 2. On the other hand, if the value is greater than 100, it means that the sound absorption performance is higher than that of Comparative Example 2 and the road noise is smaller than that of Comparative Example 2.

The results of the tests, etc., are shown in Tables 1 and 2 (Comparative Example 2 not shown).

**[Table 1]**

| | Comparative Example 1 | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Composition of sealant material (Table 2) | A | A | B | C | A | A | A | A | A | A | D |
| Presence/absence of sound-damping body | Absence | Presence | Presence | Presence | Presence | Presence | Presence | Presence | Presence | Presence | Presence |
| Adhesive force between sound-damping body and sealant layer (N/cm²) | -- | 20 | 0 | 4.9 | 20 | 20 | 20 | 20 | 20 | 20 | 7.8 |
| Elongation of sound-damping body (%) | - | 200 | 200 | 200 | 50 | 100 | 400 | 200 | 200 | 200 | 200 |
| Hardness of sound-dampingbody (N/314 cm²) | -- | 150 | 150 | 150 | 150 | 150 | 150 | 10 | 250 | 300 | 150 |
| Presence/absence of separation of sound-damping body | -- | Presence | Presence | Presence | Presence | Presence | Presence | Presence | Presence | Presence | Presence |
| Number of separated locations of sound-damping body | 0 | 20 | 20 | 13 | 13 | 17 | 18 | 17 | 15 | 11 | 5 |
| Number of air-sealed locations | 20 | 20 | 20 | 15 | 15 | 19 | 20 | 19 | 18 | 13 | 7 |
| Damage of sound-damping body during running | - | Absence | Absence | Absence | Presence | Absence | Absence | Absence | Absence | Presence | Absence |
| Sound absorption performance (index) | 0 | 100 | 100 | 100 | 130 | 110 | 90 | 120 | 90 | 50 | 100 |

**[Table 2]**

| Unit (parts by weight) | | | | |
|---|---|---|---|---|
| | A | B | C | D |
| Isobutylene-isoprene-rubber | 100 | 100 | 100 | 100 |
| Liquid polybutene | 200 | 190 | 210 | 220 |
| Carbon | 50 | 50 | 50 | 50 |
| BPO | 10 | 11 | 9 | 8 |
| p-benzoquinone oxime | 10 | 11 | 9 | 8 |
| 0°C viscosity (kPa·s) | 40 | 43 | 37 | 34 |
| 100°C viscosity (kPa·s) | 7.0 | 7.5 | 6.5 | 6.0 |
| Adhesive force index | 100 | 90 | 110 | 120 |

As a result of the test, it can be confirmed that the pneumatic tire of each Example has good air sealing performance while suppressing noise during running.

## Claims

1. A pneumatic tire (1) comprising:
a tread portion (2);
a self-sealing sealant layer (10) disposed on a tire inner cavity (i) side of the tread portion (2); and
a sound-damping body (12) attached to the sealant layer (10),
**characterized in that** the pneumatic tire (1) is configured such that, when a foreign matter that has penetrated the tread portion (2) comes into contact with the sound-damping body (12), the sound-damping body (12) becomes separated from the sealant layer (10), and an adhesive force between the sound-damping body (12) and the sealant layer (10) is not greater than 5.0 N/cm², the adhesive force being measured by cutting out a test piece having a rectangular parallelepiped shape with a thickness of 10 mm and an adhesion surface formed as a square of 30 mm * 30 mm from the sound-damping body (12), bringing the adhesion surface of the test piece into close contact with the sealant layer (10), adhering the opposite surface of the test piece from the adhesion surface firmly to a jig, pulling the test piece perpendicularly to the sealant layer (10) using the jig, measuring a force when the test piece is peeled off from the sealant layer (10), and obtaining the adhesive force by dividing the measured force by the area of the adhesion surface of the test piece, wherein the tensile speed of the jig is set to 300 mm/min.

2. The pneumatic tire (1) according to claim 1, wherein the adhesive force between the sound-damping body (12) and the sealant layer (10) is not less than 0.10 N/cm².

3. The pneumatic tire (1) according to claim 1 or 2, wherein the sound-damping body (12) has an elongation when the test piece is broken in accordance with JIS K6400-5 2012 of 100% to 400%.

4. The pneumatic tire (1) according to any one of claims 1 to 3, wherein the sound-damping body (12) has a hardness of 10 to 250 N/314 cm² as measured on the basis of the D method of the hardness test of JIS K6400-2 2012.

5. The pneumatic tire (1) according to any one of claims 1 to 4, wherein the sound-damping body (12) is a sponge.

6. The pneumatic tire (1) according to any one of claims 1 to 5, wherein the sound-damping body (12) is an ether/ester-based mixed polyurethane sponge.

7. The pneumatic tire (1) according to any one of claims 1 to 6, wherein the sound-damping body (12) is in direct contact with the sealant layer (10).

## Patentansprüche

1. Luftreifen (1), umfassend:
einen Laufstreifenabschnitt (2);
eine selbstabdichtende Dichtmittelschicht (10), die auf einer Reifen-Innenhohlraum (i)-Seite des Laufstreifenabschnitts (2) angeordnet ist; und
einen schalldämpfenden Körper (12), der an der Dichtmittelschicht (10) befestigt ist,
**dadurch gekennzeichnet, dass** der Luftreifen (1) so ausgestaltet ist, dass, wenn ein Fremdkörper, der den Laufstreifenabschnitt (2) durchdrungen hat, mit dem schalldämpfenden Körper (12) in Kontakt kommt, der schalldämpfende Körper (12) von der Dichtmittelschicht (10) getrennt wird, und eine Haftkraft zwischen dem schalldämpfenden Körper (12) und der Dichtmittelschicht (10) nicht größer ist als 5,0 N/cm², wobei die Haftkraft gemessen ist, indem ein Prüfkörper, der eine rechtwinklige Parallelepiped-Form mit einer Dicke von 10 mm und einer als ein Quadrat von 30 mm * 30 mm ausgebildeten Haftoberfläche aufweist, aus dem schalldämpfenden Körper (12) ausgeschnitten wird, die Haftoberfläche des Prüfkörpers in engen Kontakt mit der Dichtmittelschicht (10) gebracht wird, die der Haftoberfläche entgegengesetzte Oberfläche des Prüfkörpers fest an einer Spannvorrichtung angebracht wird, unter Verwendung der Spannvorrichtung senkrecht zur Dichtmittelschicht (10) an dem Prüfkörper gezogen wird, eine Kraft gemessen wird, wenn der Prüfkörper von der Dichtmittelschicht (10) abgeschält wird, und die Haftkraft erhalten wird, indem die gemessene Kraft durch die Fläche der Haftoberfläche des Prüfkörpers geteilt wird, wobei die Zuggeschwindigkeit der Spannvorrichtung auf 300 mm/min eingestellt ist.

2. Luftreifen (1) nach Anspruch 1, wobei die Haftkraft zwischen dem schalldämpfenden Körper (12) und der Dichtmittelschicht (10) nicht weniger als 0,10 N/cm² beträgt.

3. Luftreifen (1) nach Anspruch 1 oder 2, wobei der schalldämpfende Körper (12), wenn der Prüfkörper reißt, eine Dehnung gemäß JIS K6400-5 2012 von 100% bis 400% aufweist.

4. Luftreifen (1) nach einem der Ansprüche 1 bis 3, wobei der schalldämpfende Körper (12) eine Härte von 10 bis 250 N/314 cm², wie auf Grundlage des Verfahrens D der Härteprüfung nach JIS K6400-2 2012 gemessen, aufweist.

5. Luftreifen (1) nach einem der Ansprüche 1 bis 4, wobei der schalldämpfende Körper (12) ein Schwamm ist.

6. Luftreifen (1) nach einem der Ansprüche 1 bis 5, wobei der schalldämpfende Körper (12) ein Ether/Ester-basierter gemischter Polyurethanschwamm ist.

7. Luftreifen (1) nach einem der Ansprüche 1 bis 6, wobei der schalldämpfende Körper (12) in unmittelbarem Kontakt mit der Dichtmittelschicht (10) steht.

## Revendications

1. Bandage pneumatique (1) comprenant :
une portion formant bande de roulement (2) ;
une couche d'étanchéité auto-obturante (10) disposée sur un côté de cavité interne (i) du pneumatique de la portion formant bande de roulement (2) ; et
un corps d'amortissement sonore (12) fixé à la couche d'étanchéité (10), **caractérisé en ce que** le bandage pneumatique (1) est configuré de telle sorte que, quand une matière étrangère qui a pénétré dans la portion formant bande de roulement (2) vient en contact avec le corps d'amortissement sonore (12), le corps d'amortissement sonore (12) se sépare de la couche d'étanchéité (10), et une force adhésive entre le corps d'amortissement sonore (12) et la couche d'étanchéité (10) n'est pas supérieure à 5,0 N/cm², la force adhésive étant mesurée en découpant une pièce à tester ayant une forme de parallélépipède rectangle avec une épaisseur de 10 mm et une surface d'adhérence formée comme carré de 30 mm * 30 mm à partir du corps d'amortissement sonore (12), en amenant la surface d'adhérence de la pièce à tester en contact intime avec la couche d'étanchéité (10), en faisant adhérer la surface opposée de la pièce à tester provenant de la surface d'adhérence fermement à un gabarit, en tirant la pièce à tester perpendiculairement à la couche d'étanchéité (10) en utilisant le gabarit, en mesurant une force quand la couche d'étanchéité (10) est décollée de la pièce à tester, et en obtenant la force adhésive en divisant la force mesurée par l'aire de la surface d'adhérence de la pièce à tester, la vitesse de traction du gabarit étant fixée à 300 mm/min.

2. Bandage pneumatique (1) selon la revendication 1, dans lequel la force adhésive entre le corps d'amortissement sonore (12) et la couche d'étanchéité (10) n'est pas inférieure à 0,10 N/cm².

3. Bandage pneumatique (1) selon la revendication 1 ou 2, dans lequel le corps d'amortissement sonore (12) présente une élongation, quand la pièce à tester est rompue selon la norme industrielle japonaise JIS K64000-5 2012, de 100 % à 400 %.

4. Bandage pneumatique (1) selon l'une quelconque des revendications 1 à 3, dans lequel le corps d'amortissement sonore (12) présente une dureté de 10 à 250 N/314 cm² telle que mesurée sur la base du procédé D du test de dureté de la norme JIS K6400-2 2012.

5. Bandage pneumatique (1) selon l'une quelconque des revendications 1 à 4, dans lequel le corps d'amortissement sonore (12) est une éponge.

6. Bandage pneumatique (1) selon l'une quelconque des revendications 1 à 5, dans lequel le corps d'amortissement sonore (12) est une éponge polyuréthane mélangée à base d'éther/ester.

7. Bandage pneumatique (1) selon l'une quelconque des revendications 1 à 6, dans lequel le corps d'amortissement sonore (12) est en contact direct avec la couche d'étanchéité (10).
